(19) Europäisches Patentamt
European Patent Office
Office européen des brevets

(11) Veröffentlichungsnummer: **0 126 870**
**B1**

(12) # EUROPÄISCHE PATENTSCHRIFT

(45) Veröffentlichungstag der Patentschrift: **10.06.87**

(51) Int. Cl.⁴: **C 08 K 5/54**, C 08 L 11/00, C 08 L 15/02, C 08 L 23/28

(21) Anmeldenummer: **84102750.1**

(22) Anmeldetag: **14.03.84**

(54) **Vulkanisierbare Halogenkautschukmischungen und Verfahren zum Vulkanisieren bzw. Vernetzen.**

(30) Priorität: **27.05.83 DE 3319251**

(43) Veröffentlichungstag der Anmeldung: **05.12.84 Patentblatt 84/49**

(45) Bekanntmachung des Hinweises auf die Patenterteilung: **10.06.87 Patentblatt 87/24**

(84) Benannte Vertragsstaaten: **AT BE CH DE FR GB IT LI LU NL SE**

(56) Entgegenhaltungen:
**FR-A-2 090 555**
**GB-A-2 020 293**
**US-A-3 215 718**

**KAUTSCHUK UND GUMMI, Band 28, Nr. 12, 1975, Seiten 733-739, Dr. Alfred Huetig Verlag GmbH, Heidelberg, DE; F. THURN et al.: "Neue Organosilane für die Reifenindustrie"**

(73) Patentinhaber: **Degussa Aktiengesellschaft, Weissfrauenstrasse 9, D-6000 Frankfurt am Main 1 (DE)**

(72) Erfinder: **Wolff, Siegfried, Weiherstrasse 28, D-5303 Bornheim- Merten (DE)**
Erfinder: **Buder, Wolfgang, Dr., Farol de Itapoan Rua F. Nr.7, 40.000 Salvador- Bahia (BR)**
Erfinder: **Grewatta, Heinz, Tacitusstrasse 16, D-5000 Köln 51 (DE)**

**EP 0 126 870 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft vulkanisierbare Halogenkautschukmischungen, die einen silikatischen Füllstoff, gegebenenfalls in Mischung mit Ruß, und mindestens eine siliciumhaltige Isothiuroniumverbindung enthalten und ein Verfahren zum Vulkanisieren bzw. Vernetzen dieser Mischungen.

Es ist bekannt, daß in mit Schwefel vulkanisierbaren Kautschuk-Mischungen, die einen höheren Anteil an silikatischen Füllstoffen wie beispielsweise gefällte Kieselsäure enthalten sollen, als Mischungsbestandteil ein Silan notwendig ist, um den Vulkanisaten ausreichend gute Eigenschaften zu verleihen.

In der DE-AS 28 19 638 wird beschrieben, daß aus silikatische Füllstoffe enthaltenden Kautschuk-Mischungen auf der Basis von halogenhaltigen Kautschuksorten wertvolle Vulkanisationsprodukte entstehen, wenn die Mischungen bestimmte halogenhaltige Silane enthalten.

Derartige Mischungen nach dem Stand der Technik enthalten als Vulkanisationsbeschleuniger häufig Verbindungen aus der Thioharnstoffklasse.

Es wurde nun gefunden, daß überraschenderweise aus diesen an sich bekannten Halogenkautschukmischungen Vulkanisationsprodukte mit verbesserten Eigenschaften hergestellt werden, wenn anstelle eines halogenhaltigen Silans und eines Beschleunigers aus der Thioharnstoffklasse eine siliciumhaltige Isothiuroniumverbindung eingearbeitet wird.

Gegenstand der Erfindung sind vulkanisierbare Kautschuk-Mischungen, enthaltend mindestens einen Halogenkautschuk, silikatischen Füllstoff und gegebenenfalls ein Halogensilan, dadurch gekennzeichnet, daß sie mindestens eine Isothiuroniumverbindung der Formel

I 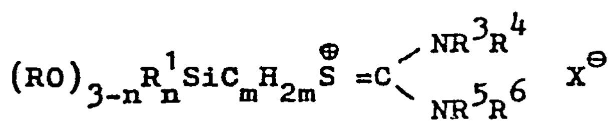

in Mengen von 0,1 bis 5 Gew.-Teilen, bezogen auf 100 Gew.-Teile des Halogenkautschuks enthalten, in der bedeuten,

X: Chlorid, Bromid oder Jodid

m: eine Zahl von 1 bis 6

$R^1$: eine $C_1$- bis $C_5$-Alkylgruppe, eine $C_5$- oder $C_6$-Cycloalkyl- oder die Phenylgruppe,

R: eine $C_1$- bis $C_5$-Alkylgruppe, eine $C_5$ oder $C_6$-Cycloalkglgruppe, die β-Methoxiethylgruppe, die Phenyl- oder die Benzylgruppe

n: 0, 1 oder 2,

$R^3$, $R^4$, $R^5$, $R^6$, gleich oder verschieden, Wasserstoff, eine $C_1$- $C_5$-Alkylgruppe,

oder $R^3$, $R^5$ Wasserstoff, $R^4$, $R^5$, gleich oder verschieden, Wasserstoff, eine $C_5$-$C_6$-Cycloalkglgruppe, die Phenyl- oder die Benzylgruppe, oder

$R^4$ und $R^6$ eine zusammenhängende $C_2$-$C_4$-Alkylenkette.

Zu den Isothiuroniumverbindungen, die erfindungsgemäß einzeln oder im Gemisch in den Halogenkautschukmischungen in Mengen von 0,1 bis 5 Gew.-Teilen, bevorzugt von 0,1 bis 2,0, bezogen auf 100 Gew.-Teile Halogenkautschuk, zugegen sein müssen, zählen insbesondere die Verbindungen, die an das Siliciumatom gebunden eine Triethoxy-, Trimethoxy- oder eine Diethoxymethyl-, Dimethoximethylgruppe enthalten, bei denen $C_mH_{2m}$ gleichzusetzen ist mit Ethyl, Propyl oder Butyl und bei denen die Isothiuroniumgruppe an den Stickstoffatomen durch jeweils zwei Methyl- oder Ethylgruppen oder jeweils durch ein Wasserstoffatom, eine Methyl-, Ethyl-, Butyl- oder Phenylgruppe substituiert ist, wobei die Kohlenwasserstoffreste gleich oder verschieden sein können.

Die genannten, erfindungsgemäß eingesetzten Organosilane werden nach an sich bekannten Verfahren aus Thioharnstoffderivaten der Formel

II 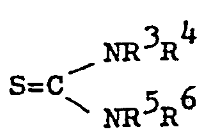

und Halogensilanen der Formel

III $(RO)_{3-n}R^1_nSiC_mH_{2m}X$

gewonnen. Herstellverfahren sind beispielsweise in der US-PS 3 215 718, US-PS 3 314 982 oder in der DE-PS

2 120 002 beschrieben.

Die Zusammensetzung von Halogenkautschukbasismischungen ist dem Fachmann an sich bekannt. Dabei sind unter Basismischungen derartige Erzeugnisse zu verstehen, wie sie z.B. in der DE-AS 28 19 638 bei Unkenntnis der vorteilhaften Verwendungsmöglichkeiten von siliciumhaltigen Isothiuroniumverbindungen gemäß Formel I beschrieben werden. Die Anteile der einzelnen Mischungsbestandteile können dabei in weiten Grenzen variiert werden.

Bei der Verwendung der siliciumhaltigen Isothiuroniumverbindungen fällt gegenüber den oben angeführten Basismischungen das Zumischen von elementarem Schwefel weg. Ebenso werden neben den Isothiuroniumverbindungen gemäß Formel I keine weiteren Beschleuniger mehr benötigt.

Freie Halogensilane gemäß Formel III können in Mengen von 0 bis 3 Gew.-Teilen, vorzugsweise 0 Gew.-Teile in der vulkanisierbaren erfindungsgemäßen Mischung vorhanden sein.

Zu den verwendbaren Halogenkautschuken zählen beispielsweise halogenierte Butylkautschuke, insbesondere bromierte oder chlorierte Butylkautschuke, Chlorkautschuke, Kautschukhydrochloride und vorzugsweise halogenierte Butylkautschuke und insbesondere die Polymeren von 2-Chlorbutadien-1,3. Es kann auch chlorsulfoniertes Polyäthylen eingesetzt werden.

Die nach der Erfindung verwendbaren silikatischen Füllstoffe, auch als Mischung von zwei oder mehr Füllstoffen, sind an sich in der Kautschuktechnologie bekannte Füllstoffe. Dabei ist der Begriff "silikatischer Füllstoff" ein weitgefaßter und bezieht sich auf mit Kautschuken verträgliche bzw. in Kautschukmischungen einarbeitbare Fullstoffe, die aus Silikaten bestehen, Silikate enthalten und bzw. oder Silikate im weitesten Sinne chemisch gebunden enthalten. Insbesondere zählen zu den silikatischen Füllstoffen:

Hochdisperse Kieselsäure-Füllstoffe (Siliciumdioxid) mit spezifischen Oberflächen im Bereich von etwa 5 bis 1000, vorzugsweise 20 bis 400 $m^2/g$ und mit Primärteilchengrößen im Bereich von etwa 10 bis 400 nm, die hergestellt werden können z.B. durch Ausfällung aus Lösungen von Silikaten mit anorganischen Säuren, durch hydrothermalen Aufschluß, durch hydrolytische und bzw. oder oxidative Hochtemperaturumsetzung von flüchtigen Siliciumhalogeniden oder durch ein Lichtbogenverfahren. Diese Kieselsäuren können gegebenenfalls auch als Mischoxide oder Oxidgemische mit den Oxiden der Metalle Aluminium, Magnesium, Calcium, Barium, Zink, Zirkon und/oder Titan vorliegen.

Synthetische Silikate z.B. Aluminiumsilikat oder Erdalkalisilikate wie Magnesium- oder Calciumsilikat, mit spezifischen Oberflächen von etwa 20 bis 400 $m^2/g$ und Primarteilchengrößen von etwa 10 bis 400 nm.

Natürliche Silikate, z.B. Kaoline, Tone und Asbeste, Clays, sowie natürliche Kieselsäuren wie beispielsweise Quarz und Kieselgur.

Glasfasern und Glasfasererzeugnisse wie Matten, Stränge, Gewebe, Gelege und dergleichen sowie Mikroglaskugeln.

Die genannten Silikatfüllstoffe werden vorzugsweise in Mengen von etwa 10 oder gegebenenfalls noch darunter bis zu etwa 250 Gewichtsteilen, bezogen auf 100 Gewichtsteile des Kautschukpolymeren, eingesetzt.

Als Füllstoffmischungen können genannt werden Kieselsäure/Kaolin oder Kieselsäure/Glasfasern/Asbest sowie Verschnitte der silikathaltigen Verstärkerfüllstoffe mit den bekannten Gummirußе, z.B. Kieselsäure/ISAF-Ruß oder Kieselsäure/Glasfaserkord/HAF-Ruß.

Erfindungsgemäß werden als silikatische Füllstoffe die hochdispersen oder aktiven Kieselsäuren vorgezogen, insbesondere die gefällten Kieselsäuren und vorzugsweise in Mengen von 5 bis 150 Gewichtsteilen, bezogen auf 100 Gewichtsteile Kautschuk.

Ruß kann zusätzlich in den erfindungsgemäßen Kautschuk-Mischungen zugegen sein, nicht nur zur Grau- oder Schwarzfärbung der Vulkanisate, sondern zur Erzielung von besonderen, wertvollen Vulkanisateigenschaften, wobei die bekannten Gummiruße vorgezogen werden. Der Ruß wird in Mengen von 0 bis 150 Gewichtsteilen, vorzugsweise von 0,1 - 80 Gew.-Teile, bezogen auf 100 Gewichtsteile Kautschuk, in den neuen Kautschuk-Mischungen eingesetzt.

Eine untere Grenze mit der Zahl Null bedeutet im Rahmen der vorliegenden Erfindung, daß der Mischungsbestandteil in der Kautschukmischung vorhanden sein kann, aber nicht muß. Wenn Ruß in einer Mischung zugegen ist, ist die untere Grenze praktisch bei 0,1 Gewichtsteilen anzusetzen.

Für den Fall des Vorhandenseins von silikatischem Füllstoff und Ruß in den Kautschuk-Mischurgen wird der Gesamtfüllstoffgehalt, bezogen auf 100 Gewichtsteile Kautschuk, auf maximal 250 Gewichtsteile begrenzt. Im allgemeinen kann man 150 Gewichtsteile als obere Grenze ansehen.

An sich bekannte Stabilisierungsmittel, insbesondere solche aus der Gruppe der Alterungsschutzmittel, der Ermüdungsschutzmittel, der Oxidationsschutzmittel, der Lichtschutzmittel und der Ozonschutzmittel sowie auch Mischungen von diesen können mit Vorteil in den erfindungsgemäßen Kautschukmischungen zugegen sein, und zwar in Mengen von 0,2 bis 10 Gewichtsteilen, bezogen auf 100 Gewichtsteile des Halogenkautschuks.

Ferner kann es von besonderem Vorteil sein, wenn die Halogenkautschukmischungen Weichmacher oder Weichmacheröle enthalten, beispielsweise hocharomatische naphthenische oder paraffinische Weichmacheröle, vorteilhafterweise solche mit niedrigen Stockpunkten etwa zwischen 0° und -60°C. Der Mengenanteil an Weichmacheröl kann in weiten Grenzen schwanken, so kann er mehr als 0,5 oder 5 Gewichtsteile betragen, insbesondere mehr als 10 bis etwa 100 Gewichtsteile.

Die neuen Halogenkautschuk-Mischungen enthalten vorzugsweise eine organische, bei Zimmertemperatur feste Säure, wie sie in der Kautschuktechnologie Verwendung finden, in Mengen von 0,2 bis 10 Gewichtsteilen, bezogen auf 100 Gewichtsteile des Kautschuks, vorzugsweise Fettsäuren wie Stearinsäure oder entsprechende

Säuren der homologen Reihe, ferner Benzoe- oder Salicylsäure.

Weiterhin müssen den erfindungsgemäßen Kautschukmischungen Oxide von mehrwertigen Metallen, wie sie ebenfalls in der Kautschuktechnologie Verwendung finden, in Mengen von 0,1 - 15 Gewichtsteilen, bezogen auf 100 Gewichtsteile des Kautschuks hinzugefügt werden. Zu diesen Metalloxiden zählt in erster Linie das Zinkoxid, insbesondere in feinteiliger und bzw. oder aktiver Form. Weiterhin sind gut verwendbar Magnesiumoxid oder gegebenenfalls Bleioxid. Diese Oxide werden vorzugsweise in feinteiliger, aktiver oder pulveriger Form eingesetzt. Auch Mischungen der Metalloxide können verwendet werden.

Die neuen Halogenkautschuk-Mischungen werden auf folgende Weise hergestellt. Vorgezogen wird ein zweistufiger Mischzyklus. In der ersten Stufe werden in einer Knetvorrichtung bei Durchflußtemperaturen zwischen 55 und 65° C, vorzugsweise von 60° C, folgende Bestandteile gemischt:

Innerhalb der ersten Minute der Kautschuk und das Metalloxid, beispielsweise also das Polychlorbutadien und das Magnesiumoxid;

innerhalb der dann folgenden anderthalb Minuten die Hälfte des silikatischen Füllstoffs und die übrigen Füllstoffe;

innerhalb der darauf folgenden anderthalb Minuten die zweite Halfte des silikatischen Füllstoffs, gegebenenfalls das Halogensilan, der Weichmacher, z. B. das Weichmacheröl und die übrigen Mischungsbestandteile mit Ausnahme der siliciumhaltigen Isothiuroniumverbindung gemäß Formel I und des Zinkoxids; nach insgesamt vier und einer halben Minute wird die Mischung aus dem Kneter ausgefahren.

In der zweiten Mischungsstufe wird zu der Vormischung aus der ersten Mischungsstufe nun auf einem Walzenpaar bei einer Durchflußtemperatur von etwa 45 bis 55° C, vorzugsweise von 50° C, das Zinkoxid und die Isothiuroniumverbindung hinzugemischt.

Dieses zweistufige Mischungsverfahren vermeidet das vorzeitige Anvulkanisieren der Mischung.

Industrielle Einsatzgebiete für die beschriebenen Kautschukmischungen und deren Vulkanisate sind beispielsweise:

Technische Gummiartikel wie Kabelmäntel, Schläuche, Heizschläuche, Treibriemen, Keilriemen, Förderbänder, Walzenbelege, Dichtungen, elektrische Isolierungen, Auskleidungen, Imprägnierungen und Beschichtungen von hitzebeständigen Geweben, Dämpfungs- und Vibrationselemente und dergleichen Artikel, an die hohe Anforderungen hinsichtlich Temperatur- und bzw. Ölbeständigkeit gestellt werden.

Im folgenden werden einige beispielhafte Rezepturen für die neuen Halogenkautschuk-Mischungen mit Prufergebnissen, einschließlich der Vernetzungsprodukte, mit Auswertungen bzw. Vergleichen dieser Ergebnisse gegeben. Darin wiederholen sich viele verschiedene Begriffe, so daß folgende Abkürzungen verwendet werden.

**Verzeichnis der verwendeten Abkürzungen**

| Abkurzung | Bezeichnung | Gemessen in |
|---|---|---|
| $t_5$ | Mooney-Scorch-Zeit (130° C) | Minuten |
| $t_{35}$ | Mooney-Cure-Zeit (130° C) | Minuten |
| ML 4 | Mooney-Plastizität-Viskosität bei 100° C, Normalrotor, Prüfdauer: 4 Minuten | - |
| ZF | Zugfestigkeit | Mpa |
| M 100 | Spannungswert bei 100 % | Mpa |
| M 200 | Spannungswert bei 200 % und | Mpa |
| M 300 | Spannungswert bei 300 % Dehnung (moduli) | Mpa |
| BD | Bruchdehnung | % |
| SH | Shore-A-Härte | - |
| A | Abrieb (auch "DIN-Abrieb") | $mm^3$ |
| CS | Druckverformungsrest (Compression Set B, 22 Stunden, 70° C) | % |

Prüfungsnormen

Die physikalischen Prüfungen wurden bei Raumtemperatur nach folgenden Normvorschriften ausgeführt: Zugfestigkeit, Bruchdehnung und Spannungswert an 6 mm starken

| | |
|---|---|
| Ringen | DIN 53 504 |
| Shore-A-Härte | DIN 53 505 |
| Spezifisches Gewicht | DIN 53 550 |
| Mooney-Prüfung | DIN 53 524 |
| Abrieb, auch DIN-Abrieb genannt | DIN 53 516 |
| Bestimmung des Druckverformungsrestes von Gummi | DIN 53 517 |
| Rheometerprüfung (D min) | DIN 53529 (vorniom 1972) |

In den Beispielen werden folgende Isothiuroniumverbindungen eingesetzt:

Si 70 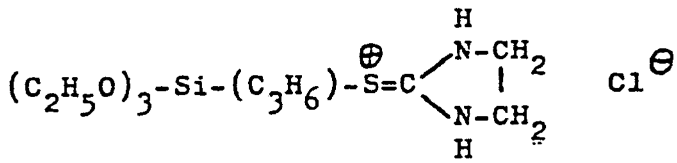

Si 71 wie Si 70, enthält aber nicht Cl⊖, sondern Br,⊖

OS 34 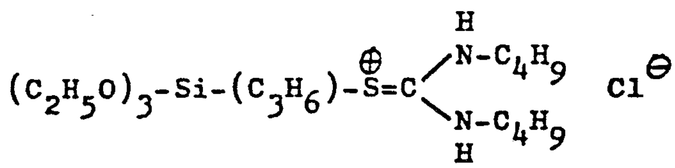

OS 81 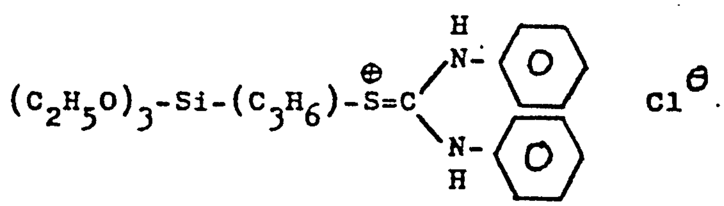

Die Vernetzungsprodukte bzw. die Prüflinge wurden in einer dampfbeheizten Stufenpresse bei den angegebenen Vulkanisationstemperaturen und Heizzeiten (Vernetzungszeiten) hergestellt.

In den Beispielen sind die Mengen der Mischungsbestandteile in Gewichtsteilen angegeben. Bedeutung von phr: pro hundert Teile Kautschuk.

**Versuche mit Chlorbutadienkautschuk**

Die Grundmischung A besteht aus folgenden Bestandteilen: (Angaben in Gew.-Teilen)

**Tabelle 1**

| | |
|---|---|
| Polychlorbutadienkautschuk (Chlorgehalt etwa 38 %; Viskosität 40 bis 45 Mooney-Einheiten): | 100 |
| Magnesiumoxid, feinteilig | 4 |
| Stearinsäure | 1 |
| Vaseline (salbenartiges, reines Kohlenwasserstoffgemisch aus Rückstanden der Erdöldestillation) | 1 |
| N-Isopropyl-N'phenyl-p-phenylendiamin (Alterungsschutz) | 2 |
| Feinteilige gefällte Kieselsäure (VN 3 Ultrasil®) | 40 |
| Zinkoxid, feinteilig, aktiv | 5 |

**Beispiel 1**

Die Grundmischung A wird in folgender Weise erganzt:

**Tabelle 2**

| **Probennummer** | **1** | **2** | **3** |
|---|---|---|---|
| Chlorpropyltriethoxysilan (Cl-PTES) | - | 2,5 | 0,73 |
| Si 70 | - | - | 2,52 |
| Äthylenthioharnstoff (ETU) | 0,75 | 0,75 | - |

Nach der Formgebung der aus den Mischungen hergestellten Probestücke erfolgte die Vernetzung bei 170°C in 60 min. Die Prüfungen ergaben folgende Werte:

**Tabelle 3**

| **Probennummer** | **1** | **2** | **3** |
|---|---|---|---|
| $D_{min}$,[Nm] | 2,34 | 1,56 | 1,56 |
| $M_{[MPa]}300$ | 10,9 | 13,7 | 15,1 |
| $A_{[mm^3]}$ | 113 | 90 | 78 |
| CS | 25,5 | 14,8 | 12,2 |

Das Vulkanisat der erfindungsgemäßen Halogenkautschukmischung (Probe 3) zeigt gegenüber den Vulkanisaten nach Stand der Technik deutlich bessere Werte in Bezug auf Festigkeit, Spannungswert 300 %, Abrieb und Compression Set.

**Beispiel 2**

Die Grundmischung A wird in folgender Weise ergänzt:

**Tabelle 4**

| **Probennummer** | **1** | **4** | **5** |
|---|---|---|---|
| CIPTES | - | 2,5 | - |
| Si 70 | - | - | 2,0 |
| Äthylenthioharnstoff (ETU) | 0,75 | 0,75 | - |

Die Vulkanisation erfolgte bei 170°C in 120 min.
Es wurden folgende Werte gemessen:

**Tabelle 5**

| **Probennummer** | **1** | **4** | **5** |
|---|---|---|---|
| $D_{min}$, Nm | 1,83 | 1,43 | 1,41 |
| ML 4 | 155 | 128 | 124 |
| ZF [Mpa] | 13,8 | 15,7 | 18,7 |
| M 300 % [Mpa] | 7,9 | 14,5 | 16,8 |
| CS | 17,4 | 12,7 | 9,4 |

Während in Beispiel 1 die Menge des Si 70 so berechnet wurde, daß die in der Halogenkautschukmischung enthaltenen Mengen Thioharnstoff bzw. Cl-PTES der Menge Si 70 in den Proben Nr. 1 und 2 entsprach, wurden in Probe 5 2phr Si 70 gegenüber allein 2,5phr Cl-PTES eingesetzt, zu denen noch 0,75phr ETU kommen.
Auch in diesem Fall erhält man trotz geringeren Wirkstoffverbrauchs deutlich höhere Werte für die Zugfestigkeit und Spannung sowie einen geringeren Compression Set (Probe 5).

**Beispiel 3**

Die Grundmischung wird in folgender Weise ergänzt:

**Tabelle 6**

| **Probennummer** | **6** | **7** | **8** | **9** | **10** | **11** |
|---|---|---|---|---|---|---|
| Cl-PTES | - | 2,5 | - | - | - | - |
| Dibutylthioharnstoff | 0,75 | 0,75 | - | - | - | - |
| OS 34 | - | - | 1 | 1,5 | 2 | 2,5 |

Nach einer Vulkanisationstemperatur von 170°C und Vulkanisationszeiten von 60 bzw. 120 min wurden folgende Werte gemessen:

**Tabelle 7**

| **Probennummer** | **6** | **7** | **8** | **9** | **10** | **11** |
|---|---|---|---|---|---|---|
| Vulkanisationszeit: | 60 | 60 | 80 | 60 | 60 | 60 |
| (min) | 120 | 120 | 120 | 120 | 120 | 120 |
| ZF | 18,5 | 18,7 | 23,6 | 21,0 | 19,4 | 22,7 |
| [Mpa] | 17,1 | 24,6 | 23,4 | 24,8 | 19,3 | 23,7 |
| M 100 % | 1,9 | 2,3 | 2,2 | 2,5 | 2,8 | 3,1 |
| [MPa] | 2,3 | 2,5 | 3,1 | 3,0 | 3,4 | 3,2 |
| M 200 % | 4,4 | 6,1 | 6,0 | 7,1 | 8,1 | 8,8 |
| [Mpa] | 5,1 | 7,0 | 8,0 | 8,5 | 9,4 | 9,5 |
| M 300 % | 8,1 | 12,0 | 11,5 | 13,6 | 15,5 | 16,5 |
| [Mpa] | 8,8 | 13,3 | 14,1 | 15,8 | 17,1 | 17,9 |
| BD | 560 | 410 | 540 | 410 | 370 | 390 |
| % | 520 | 480 | 460 | 440 | 320 | 380 |
| SH | 63 | 66 | 65 | 68 | 69 | 68 |
| 23° C | 67 | 69 | 72 | 72 | 72 | 72 |
| $A_{mm^3}$ | 123 | 89 | 79 | 73 | 69 | 71 |
| | 124 | 83 | 84 | 73 | 67 | 62 |

Es zeigt sich die mit steigender OS 34 Konzentration zunehmende Überlegenheit der erfindungsgemäßen Halogenkautschukmischungen 8-11.

Um die Eigenschaften einer Mischung nach dem Stand der Technik zu erzielen, die 2,5pHr Cl-PTES und 0,75pHr DBTU enthält (Probe 7), reicht erfindungsgemäß 1pHr OS 34 in einer Halogenkautschukmischung aus.

**Beispiel 4**

Die Grundmischung A wird in folgender Weise ergänzt:

**Tabelle 8**

| **Probennummer** | **12** | **13** | **14** | **15** | **16** | **17** | **18** |
|---|---|---|---|---|---|---|---|
| Cl-PTES | - | 2,5 | - | - | - | - | - |
| Rhenocure ® CA | 0,75 | 0,75 | - | - | - | - | - |
| OS 81 | - | - | 0,5 | 1 | 1,5 | 2 | 2,5 |

Es ergibt sich eine starke viskositätssenkende Wirkung des OS 81 gegenüber den Vergleichsmischungen 12 und 13. Dies ist gleichbedeutend mit einem geringeren Energieaufwand bei der Herstellung der Mischungen.

**Tabelle 9**

Rheometerprüfung (Monsanto, Typ: MPV) Verformungsamplitude: 3 Grad, Prüffrequenz: 3 Zyklen/min, Laufzeit: 2 h, Prüftemperatur: 170° C

| **Probennummer** | **12** | **13** | **14** | **15** | **16** | **17** | **18** |
|---|---|---|---|---|---|---|---|
| Dmin [Nm] | 2,56 | 1,83 | 2,28 | 2,17 | 2,27 | 2,26 | 1,87 |
| Dmax [Nm] | | | | | | | |
| Dmax - Dmin [Nm] | | | | | | | |
| D120' [Nm] | 9,32 | 12,02 | 9,59 | 9,76 | 10,94 | 11,45 | 10,24 |
| D120'- Dmin [Nm] | 6,76 | 10,19 | 7,31 | 7,60 | 8,67 | 9,20 | 8,38 |
| $\frac{D120 - D60'}{D120' - Dmin}$ (%) | 16,4 | 13,2 | 20,3 | 20,2 | 18,1 | 16,6 | 11,6 |

Die Prüfung der bei 170° C vulkanisierten Halogenkautschukmischungen führte zu folgenden Werten:

**Tabelle 10**

| Probennummer | 12 | 13 | 14 | 15 | 16 | 17 | 18 |
|---|---|---|---|---|---|---|---|
| Vulkanisationszeit | 60 | 60 | 60 | 60 | 60 | 60 | 60 |
| (min) | 120 | 120 | 120 | 120 | 120 | 120 | 120 |
| ZF | 17,3 | 16,9 | 20,0 | 21,2 | 20,8 | 22,2 | 23,2 |
| [MPa] | 15,2 | 20,4 | 21,2 | 21,8 | 22,4 | 24,7 | 23,5 |
| A | 112 | 78 | 101 | 86 | 79 | 72 | 64 |
| [$mm^3$] | 111 | 78 | 103 | 79 | 79 | 70 | 62 |

Die die siliciumhaltige Isothiuroniumverbindung enthaltende Mischung zeigt bei den Parametern Zugfestigkeit und Abrieb eine deutliche Überlegenheit. Dies ist auch dann festzustellen, wenn nur 0,5phr OS 81 (Probe 14) in der Mischung vorhanden sind im Vergleich zu 2,5phr CIPTES und 0,75phr Rhenocure® CA (Probe 13). Rhenocure® CA: (Diphenylthioharnstoff).

**Beispiel 5**

In der Grundmischung A werden 20 Teile der Kieselsäure durch 20 Teile Ruß (Corax® N 330) ersetzt und weiter wie folgt ergänzt:

**Tabelle 11**

| Probennummer | 19 | 20 | 21 |
|---|---|---|---|
| Ultrasil® VN 3 | 30 | 30 | 30 |
| CORAX® N 330 | 20 | 20 | 20 |
| Naftolen® ZD | 10 | 10 | 10 |
| Cl-PTES | - | 2,5 | - |
| OS 81 | - | - | 1,0 |
| Diphenylthioharnstoff | 0,75 | 0,75 | - |

Nach der Vulkanisation bei 170° C während 60 min. ergaben sich folgende Werte:

**Tabelle 12**

| Probennummer | 19 | 20 | 21 |
|---|---|---|---|
| ZF [Mpa] | 17,3 | 21,1 | 20,4 |
| M 300 [Mpa] | 8,9 | 12,7 | 12,2 |
| BD (%) | 520 | 470 | 470 |
| CS | 15,3 | 8,4 | 8,8 |

Auch in teilweise Ruß-gefüllten Mischungen zeigt sich demnach die Wirksamkeit der siliciumhaltigen Isothiuroniumverbindung (Probe 21), auch wenn sie in deutlich geringeren Mengen eingesetzt wird als die sie bildenden Ausgangssubstanzen in Probe 20.

**Beispiel 6**

In der Grundmischung A wird die Kieselsäure durch 80 Teile Suprex® Clay ersetzt und wie folgt ergänzt:

**Tabelle 13**

| Probennummer | 22 | 23 | 24 | 25 | 26 | 27 |
|---|---|---|---|---|---|---|
| Suprex® Clay | 80 | 80 | 80 | 80 | 80 | 80 |
| Naftolen® ZD | 10 | 10 | 10 | 10 | 10 | 10 |
| Cl-PTES | - | 2,5 | - | | | |
| OS 34 | - | - | 0,5 | 1 | 1 | 3 |
| Dibutylthio-harnstoff | 0,75 | 0,75 | - | - | - | - |

Nach der Vulkanisation 20 min bei 170° C ergab sich:

**Tabelle 14**

| Probennummer | 22 | 23 | 24 | 25 | 26 | 27 |
|---|---|---|---|---|---|---|
| ML 4 | 57 | 52 | 58 | 55 | 51 | 51 |
| ZF [Mpa] | 12,0 | 12,1 | 12,3 | 12,7 | 12,9 | 11,6 |
| M 300 % [Mpa] | 4,3 | 9,8 | 7,8 | 9,3 | 9,9 | 10,3 |
| BD (%) | 790 | 470 | 650 | 590 | 550 | 400 |
| CS | | | | | | |
| 22 h 70° C | 12,6 | 7,5 | 9,2 | 8,0 | 7,4 | 7,8 |
| 70 h 100° C | 38,4 | 26,5 | 26,3 | 24,7 | 24,7 | 24,5 |

Auch in diesen Versuchen zeigt sich wieder die Überlegenheit der die siliciumhaltigen Isothiuroniumverbindungen gemäß Formel I enthaltenden Halogenkautschukmischungen gegenüber den Mischungen nach dem Stand der Technik. Dies ist auch dann festzustellen, wenn in den Vergleichsmischungen eine größere Menge an Halogensilan und Thioharnstoffderivat eingesetzt wird als für die Bildung der in der Demonstrationsmischung verwendeten Isothiuroniumverbindung notwendig ist. Das bedeutet aber, daß mit dem Einsatz von siliciumhaltigen Isothiuroniumverbindungen auch eine Ersparnis an Rohstoffen erzielt wird.

**Beispiel 7**

Die Grundmischung A wird in folgender Weise ergänzt:

**Tabelle 15**

| Probennummer | 28 | 29 | 30 | 31 |
|---|---|---|---|---|
| 3-Brompropyltrie-oxisilan | - | 2,5 | - | - |
| Si 71 | - | - | 1 | 2 |
| ETU | 0,75 | 0,75 | - | - |

Nach der Vulkanisation ergaben sich folgende Werte

**Tabelle 16**

| Probennummer | 28 | 29 | 30 | 31 |
|---|---|---|---|---|
| Vulkanisationszeit | 60 | 60 | 60 | 60 |
| [min] | 120 | 120 | 120 | 120 |
| ZF | 16,8 | 16,8 | 21,7 | 20,5 |
| [Mpa] | 15,6 | 19,0 | 20,7 | 20,4 |
| M 200 | | | | |
| Spannungswert 200 % | 6,4 | 8,3 | 5,9 | 7,7 |
| [MPa] | 5,9 | 7,4 | 7,2 | 8,7 |
| M 300 | 10,0 | 14,6 | 10,9 | 13,7 |
| [MPa] | 9,3 | 14,1 | 12,6 | 15,4 |
| Abrieb | 119 | 97 | 85 | 81 |
| [mm³] | 138 | 101 | 95 | 86 |

Auch hier zeigt sich die Überlegenheit der Vulkanisate, die die siliciumhaltigen Isothiuroniumverbindungen enthalten, gegenuber dem Vulkanisat, das Ethylenthioharnstoff (ETU) und 3-Brompropyltriethoxisilan (BrpTES) enthält (Probe 29), obwohl die Anteile an Si 71 deutlich unter der Summe der in Probe 27 eingesetzten Br-PTES- und ETU-Mengen liegen.

**Patentansprüche**

1) Vulkanisierbare Kautschuk-Mischungen, enthaltend mindestens einen Halogenkautschuk, silikatischen Füllstoff und gegebenenfalls ein Halogensilan, dadurch gekennzeichnet, daß sie mindestens eine Isothiuroniumverbindung der Formel

$$\text{I} \quad (RO)_{3-n}R^1_n\,Si-C_mH_{2m}-\overset{\oplus}{S}=C\begin{cases} NR^3R^4 \\ NR^5R^6 \end{cases} \; X^{\ominus}$$

in Mengen von 0,1 bis 5 Gew.-Teilen, bezogen auf 100 Gew.-Teile des Halogenkautschuks enthalten, in der bedeuten,

$X^{\ominus}$: Chlorid, Bromid oder Jodid

m: eine Zahl von 1 bis 6

$R^1$: eine $C_1$-$C_5$-Alkylgruppe, eine $C_5$ oder $C_6$-Cyclo-alkyl- oder die Phenylgruppe,

R: eine $C_1$- bis $C_5$-Alkylgruppe, eine $C_5$ oder $C_6$-Cycloalkylgruppe, dieß-Methoxiethylgruppe, die Phenyl- oder die Benzylgruppe,

n: 0, 1 oder 2,

$R^3$, $R^4$, $R^5$, $R^6$, gleich oder verschieden, Wasserstoff, eine $C_1$-$C_5$-Alylgruppe,

oder $R^3$, $R^5$ Wasserstoff, $R^4$ $R^6$ gleich oder verschieden, Wasserstoff eine $C_5$-$C_6$-Cycloalkyl-gruppe, die Phenyl- oder die Benzylgruppe,

oder $R^4$ und $R_6$ eine zusammenhängende $C_2$-$C_4$-Alkylenkette.

2) Verfahren zum Vulkanisieren bzw. Vernetzen von Halogenkautschuk-Mischungen gemäß Anspruch 1 durch nach der Verformung erfolgender Erhitzung der Mischungen auf Temperaturen zwischen 100 und 200° C

während einer von der Erhitzungstemperatur abhängigen Zeitdauer zwischen 1 und 200 Minuten, dadurch gekennzeichnet, daß in die Halogenkautschukmischungen Mindestens eine Isothiuroniumverbindung der Formel

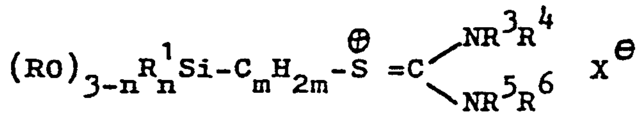

in Mengen von 0,1 bis 5 Gew.-Teilen, bezogen auf 100 Gew.-Teile des Halogenkautschuks, eingearbeitet und darin gleichmäßig verteilt werden, in der bedeuten:

$X^{\ominus}$: Chlorid, Bromid oder Jodid,

m: eine Zahl von 1 bis 6,

$R^1$: eine $C_1$- bis $C_5$-Alkylgruppe, eine $C_5$- bis $C_6$-Cycloalkylgruppe oder die Phenylgruppe,

R: eine $C_1$- bis $C_5$-Alkylgruppe, eine $C_5$- bis $C_6$-Cycloalkylgruppe, die β-Methoxyäthylgruppe, die Phenylgruppe oder die Benzylgruppe und

n: 0, 1 oder 2,

$R^3$, $R^4$, $R^5$, $R^6$, gleich oder verschieden, Wasserstoff, eine $C_1$-$C_5$-Alkylgruppe

oder

$R^3$, $R^5$ Wasserstoff, $R^4$, $R^6$, gleich oder verschieden, Wasserstoff, eine $C_5$-$C_6$-Cycloalkylgruppe, die Phenyl- oder die Benzylgruppe,

oder $R^4$ und $R^6$ eine zusammenhängende $C_2$-$C_4$-Alkylen-kette.

## Claims

1. Vulcanisable rubber mixtures containing at least one halogen rubber, silicic filler and optionally one halogen silane, characterised in that they contain at least one isothiuronium compound corresponding to the formula

I 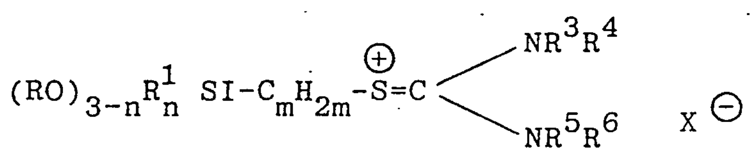

in quantities of from 0.1 to 5 parts by weight, based on 100 parts by weight of the halogen rubber in which

$X^{\ominus}$ represents chloride, bromide or iodide

m represents a number from 1 to 6

$R^1$ represents a $C_1$-$C_5$-alkyl group, a $C_5$ or $C_6$-cycloalkyl group or a phenyl group,

R represents a $C_1$- to $C_5$- alkyl group, a $C_5$ or $C_6$-cycloalkyl group, a β-methoxyethyl group, a phenyl or a benzyl group,

n represents 0, 1 or 2

$R^3$, $R^4$, $R^5$, $R^6$ which may be the same or different represent hydrogen, a $C_1$-$C_5$- alkyl group, or $R^3$, $R^5$ represent hydrogen, $R^4$, $R^6$, which may be the same or different represent hydrogen, a $C_5$-$C_6$- cycloalkyl group, a phenyl or a benzyl group, or $R^4$ and $R^6$ taken together represent $C_2$-$C_4$- alkylene chain.

2. A process for vulcanising or cross-linking halogen rubber mixtures according to claim 1 by shaping, then heating the mixtures to temperatures between 100 and 200°C for a period dependent on the heating temperature of between 1 and 200 minutes, characterised in that at least one isothiuronium compound corresponding to the formula

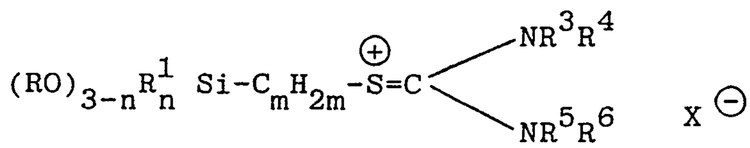

is incorporated into the halogen rubber mixtures in quantities of from 0.1 to 5 parts by weight based on 100 parts by weight of the halogen rubber and are uniformly distributed therein, in which formula

$X^{\ominus}$ represents chloride, bromide or iodide,

n represents a number from 1 to 6,

$R^1$ represents a $C_1$- to $C_5$- alkyl group, a $C_5$- to $C_6$-cycloalkyl group or a phenyl group,

R represents a $C_1$- to $C_5$- alkyl group, a $C_5$- to $C_6$-cycloalkyl group, a β-methoxyethyl group, a phenyl group or a benzyl group and

n represents 0, 1 or 2,

$R^3$, $R^4$, $R^5$, $R^6$, which may be the same or different, represent hydrogen, a $C_1$-$C_5$- alkyl group

or

$R^3$, $R^5$ represent hydrogen, $R^4$, $R^6$, which may be the same or different, represent hydrogen, a $C_5$-$C_6$-cycloalkyl group, a phenyl or a benzyl group, or $R^4$ and $R^6$ taken together represent a $C_2$-$C_4$- alkylene chain.

**Revendications**

1. Mélanges de caoutchoucs vulcanisables, contenant au moins un caoutchouc halogéné, une matière de charge du type silicate et éventuellement un halogénosilane, caractérisés en ce qu'ils contiennent, dans des proportions de 0,1 à 5 parties en poids sur la base de 100 parties en poids du caoutchouc halogène, au moins un composé d'isothiuronium de formule

I 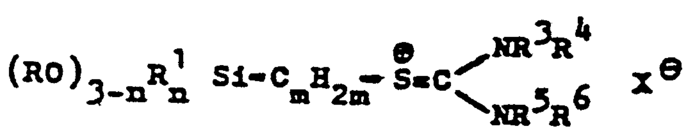

dans laquelle les symboles ont les significations suivantes:

$X^{\ominus}$: Chlorure, bromure ou iodure,

m: Nombre de 1 à 6,

R': Groupe alkyle en $C_1$ à $C_5$, groupe cycloalkyle en $C_5$, ou $C_6$ ou le groupe phényle,

R: Groupe alkyle en $C_1$ à $C_5$, groupe cycloalkyle en $C_5$ ou $C_6$, le groupe β-méthoxyéthyle, le groupe phényle ou le groupe benzyle,

n: 0, 1 ou 2,

$R^3$, $R^4$, $R^5$, $R^6$, identiques ou différents, représentent chacun un atome d'hydrogène ou un groupe alkyle en $C_1$ à $C_5$, ou $R^3$, $R^5$ représentent chacun un atome d'hydrogène et $R^4$, $R^6$, identiques ou différents, représentent un atome d'hydrogène, un groupe cycloalkyle en $C_5$ ou $C_6$, le groupe phényle ou le groupe benzyle, ou $R^4$ et $R^6$ constituent une chaîne alkylène en $C_2$ à $C_4$ de liaison.

2. Procede de vulcanisation ou réticulation de mélanges de caoutchoucs halogénés selon la revendication 1 par chauffage des mélanges, à la suite de leur moulage, à des températures comprises entre 100 et 200°C pendant une durée comprise entre 1 et 200 mn selon la température de chauffage, caractérisé en ce qu'il est incorporé et réparti uniformément, dans le mélange de caoutchoucs halogénés, dans des proportions de 0,1 à 5 parties en poids sur la base de 100 parties en poids du caoutchouc halogéné, au moins un composé d'isothiuronium de formule

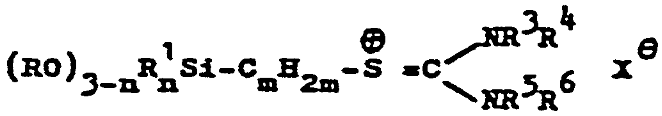

dans laquelle les symboles ont les significations suivantes:

$X^{\ominus}$: Chlorure, bromure ou iodure,

m: Nombre de 1 à 6,

R': Groupe alkyle en $C_1$ à $C_5$, groupe cycloalkyle en $C_5$ ou $C_6$ ou le groupe phényle,

R: Groupe alkyle en $C_1$ à $C_5$, groupe cycloalkyle en $R_5$ ou $C_6$, le groupe β-méthoxyéthyle, le groupe phényle ou le groupe benzyle,

n: 0, 1 ou 2,

$R^3$, $R^4$, $R^5$, $R^6$, identiques ou différents, représentent chacun un atome d'hydrogène ou un groupe alkyle en $C_1$ à $C_5$, ou $R^3$, $R^5$ représentent chacun un atome d'hydrogène et $R^4$, $R^6$, identiques ou différents, représentent un atome d'hydrogène, un groupe cycloalkyle en $C_5$ ou $C_6$, le groupe phényle ou le groupe benzyle, ou $R_4$ et $R^6$ constituent une chaîne alkylene en $C_2$ à $C_4$ de liaison.